(19) Europäisches Patentamt

European Patent Office

Office européen des brevets

(11) Veröffentlichungsnummer: **0 460 433 A1**

(12) **EUROPÄISCHE PATENTANMELDUNG**

(21) Anmeldenummer: **91107897.0**

(22) Anmeldetag: **16.05.91**

(30) Priorität: **08.06.90 DE 9006504 U**

(43) Veröffentlichungstag der Anmeldung:
**11.12.91 Patentblatt 91/50**

(84) Benannte Vertragsstaaten:
**CH DE FR GB IT LI NL SE**

(51) Int. Cl.⁵: **F16K 5/08**

(71) Anmelder: **METALPRAECIS BERCHEM +
SCHABERG GESELLSCHAFT FÜR
METALLFORMGEBUNG MBH
Am Dördelmannshof 9-11**

**W-4650 Gelsenkirchen(DE)**

(72) Erfinder: **Berchem, Rütger, Dr.
Wallneyer Strasse 29
W-4300 Essen 1(DE)**

(74) Vertreter: **Albrecht, Rainer Harald et al
Patentanwälte Andrejewski, Honke & Partner
Theaterplatz 3
W-4300 Essen 1(DE)**

(54) **Regelarmatur.**

㊐ Die Erfindung betrifft eine Regelarmatur für gasförmige und flüssige Stoffströme mit Gehäuse (1), Rohranschlußelementen (2) und einem zwischen Sitzelementen (4) gehaltenen Stellelement (3), das einen Strömungskanal (6) mit einer Strömungskanalwand (7) aus verschleißfestem Werkstoff aufweist.

Erfindungsgemäß weist der Strömungskanal (6) des Stellelementes (3) in Strömungsrichtung eine Querschnittserweiterung (11) auf, die in dem fluiddurchströmten Strömungskanal eine Strahlablösung an der Strömungskanalwand (7) bewirkt.

Fig. 1

EP 0 460 433 A1

Die Erfindung bezieht sich gattungsgemäß auf eine Regelarmatur für gasförmige und flüssige Stoffströme mit Gehäuse, Rohranschlußelementen und einem zwischen Sitzelementen gehaltenen Stellelement, das einen Strömungskanal mit einer Strömungskanalwand aus verschleißfestem Werkstoff aufweist. Die bevorzugte Ausführungsform ist ein Kugelhahn. Verschleißfester Werkstoff meint insbesondere Sinterkeramik.

Im Rahmen der aus der Praxis bekannten Maßnahmen ist der Strömungskanal zwischen Strömungskanaleintritt und Strömungskanalaustritt durchgängig mit einem konstanten Strömungskanalquerschnitt ausgebildet. Dies gilt gleichermaßen für Kugelhähne, Kükenhähne und Schieberventile. Zumeist ist der Strömungskanalquerschnitt zylindrisch. Daneben ist es aber auch bekannt, dem Strömungskanalquerschnitt besondere Konturen zu geben, um die Regelcharakteristik der Regelarmatur zu verändern. Bei einer Stoffstromregelung bilden das Stellelement und das zugeordnete Sitzelement am Strömungskanalaustritt eine Drosselstelle, an der sich Strömungswirbel bilden und ein Carnotscher Stoßverlust auftritt. Die Folge ist eine beachtliche Verschleißbeanspruchung an dem Stellelement im Bereich des Strömungskanalaustritts und an dem zugeordneten Stitzelement. Der auftretende Verschleiß begrenzt die Lebensdauer der Regelarmatur. Das gilt auch dann, wenn die Sitzelemente aus sinterkeramischem Werkstoff bestehen und in das Stellelement Verschleißschutzhülsen aus Sinterkeramik (DE-OS 38 03 417) eingesetzt werden.

Der Erfindung liegt die Aufgabe zugrunde, bei einer gattungsgemäßen Regelarmatur den strömungsbedingten Verschleiß im Bereich des Strömungskanalaustritts zu reduzieren.

Zur Lösung dieser Aufgabe lehrt die Erfindung, daß der Strömungskanal des Stellelementes in Strömungsrichtung eine Querschnittserweiterung aufweist, die in dem fluiddurchströmten Strömungskanal eine Strahlablösung an der Strömungskanalwand bewirkt. - Die Erfindung geht aus von der Erkenntnis, daß eine funktionsmäßige Verbesserung der Regelarmatur erreicht werden kann, wenn die Strömungsablösung nicht an der Grenzfläche zwischen Stellelement und Sitzelement sondern im Innern des Strömungskanals an der verschleißfesten Strömungskanalwand auftritt. Die Querschnittserweiterung des Strömungskanals definiert den Punkt der Strömungsablösung. Die Strömungsablösung geht einher mit einem Strömungsdruckverlust, der in der Literatur auch als Carnotscher Stoßverlust bezeichnet wird. Er beruht darauf, daß die Strömung sich von der Strömungskanalwand ablöst und einen Freistrahl bildet, der sich mit wandnahen ruhenden Fluidschichten mischte. Es bestehen verschiedene Möglichkeiten der weiteren Ausgestaltung. Eine Ausführungsform sieht vor, daß sich die Querschnittserweiterung unstetig von einem Strömungseintrittsquerschnitt auf einen in Strömungsrichtung konstanten Strömungsaustrittsquerschnitt ändert. Im Rahmen der Erfindung liegt es aber auch, die Querschnittserweiterung mit unstetigem Übergang an einen Strömungskanalabschnitt mit konstantem Strömungsquerschnitt anzuschließen und die Strömungskanalwand im Bereich der Querschnittserweiterung mit stetigem Profil auszubilden. Es versteht sich, daß die Querschnittserweiterung dabei mit einem hinreichend steilen Öffnungswinkel ausgebildet ist, damit an der Strömungskanalwand eine druckverlustbehaftete Strömungsablösung auftritt.

Eine bevorzugte Ausführungsform der Erfindung sieht vor, daß der Strömungskanal des Stellelementes eine Einschnürung aufweist, an die sich mit unstetigem Übergang die Querschnittserweiterung anschließt.

Dabei kann die Strömungskanalwand im Bereich der Einschnürung und der Querschnittserweiterung jeweils mit stetigem Profil in Strömungsrichtung ausgebildet sein. Bei dieser Ausführungsform der Erfindung wird der Stoffstrom durch die Einschnürung des Strömungskanals gebündelt, wobei der gebündelte Stoffstrom als Freistrahl in die Querschnittserweiterung des Strömungskanals eintritt. Durch diese Strömungsbündelung kann die Ablenkung des Stoffstromes am Strömungskanalaustritt, d. h. an dem zwischen Stellelement und Sitzelement gebildeten Austrittsspalt, reduziert werden. Das gilt insbesondere, wenn die Einschnürung bezogen auf die Strömungskanalachse asymmetrisch angeordnet ist.

Eine in konstruktiver und fertigungstechnischer Hinsicht bevorzugte Ausführungsform der Erfindung sieht vor, daß der Strömungskanal in eine sinterkeramische Hülse eingearbeitet ist, die druckentlastet in einer Bohrung des Stellelementes angeordnet und am Strömungskanalaustritt durch ein Formschlußelement axial gehalten ist. Druckentlastet meint, daß der statische Druck des Mediums im Stoffstrom strömungskanalseitig ausreichend auch auf der Außenseite der sinterkeramischen Hülse wirkt. Das Formschlußelement ist bezüglich des thermischen Ausdehnungsverhaltens an den Grundwerkstoff des Stellelementes angepaßt. Die als Verschleißschutz vorgesehene Hülse ist lose ohne kraftschlüssige Verbindung in die Bohrung des Stellelementes eingelegt. Im Rahmen der Erfindung liegt es, die Hülse mehrteilig mit Hülsenabschnitten aus verschiedenen Werkstoffen auszubilden. Auf diese Weise ist eine optimale Anpassung an die im Strömungskanal auftretenden Strömungs- und Verschleißbeanspruchungen möglich. Als Formschlußelemente kommen vorzugsweise Ringe mit verschleißfester Beschichtung oder keramische Ringe mit einer an das thermische Ausdehnungsverhalten des Stellelementes angepaßter Zusammensetzung in Betracht. Die Anordnung solcher Formschlußelemente am Strömungskanalaustritt ist möglich, da nach der erfindungsgemäßen Lehre durch Strömungsablösung im Inneren des Strömungskanals die strömungsbedingte Verschleißbeanspruchung am Strömungskanalaustritt in beachtlichem Maße reduziert ist.

Die erfindungsgemäße Lehre führt zu einem verminderten Verschleiß am Stellelement im Bereich des Strömungskanalaustritts und an dem zugeordneten Sitzelement. Das gilt in besonderem Maße, wenn die Querschnittserweiterung des Strömungskanals mit einer Einschnürung kombiniert ist und der Stoffstrom beim Durchtritt durch den Strömungskanal gebündelt wird. Mit der Reduzierung des Verschleißes ergibt sich auch eine Verbesserung im Hinblick auf die Abdichtung zwischen Stellelement und Sitzelement. Überraschenderweise tragen die erfindungsgemäßen Maßnahmen ferner zu einer Verbesserung der Regelcharakteristik der Regelarmatur bei. So kann ein größerer Regelbereich genutzt werden.

Im folgenden wird die Erfindung anhand einer lediglich ein Ausführungsbeispiel darstellenden Zeichnung ausführlicher erläutert. Es zeigen in schematischer Darstellung

Fig. 1        einen Längsschnitt durch einen erfindungsgemäß ausgebildeten Kugelhahn,

Fig. 2 bis 6  verschiedene Ausführungsformen einer Ventilkugel für den in Fig. 1 dargestellten Kugelhahn in vergrößerter Darstellung.

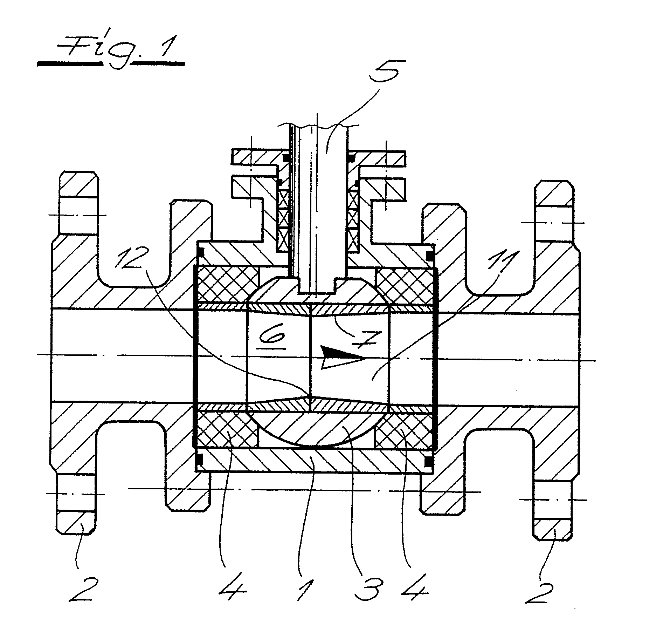

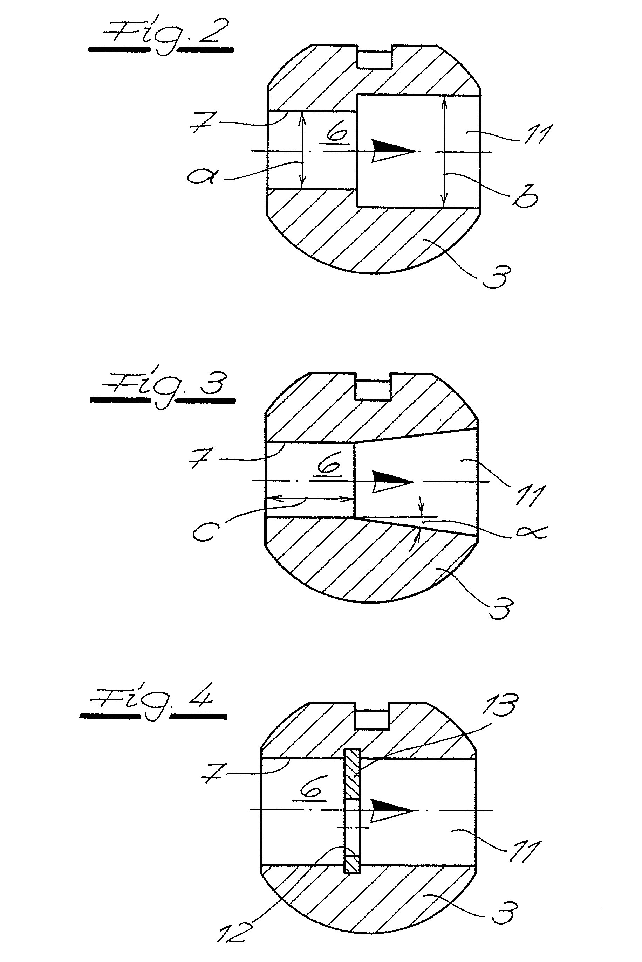

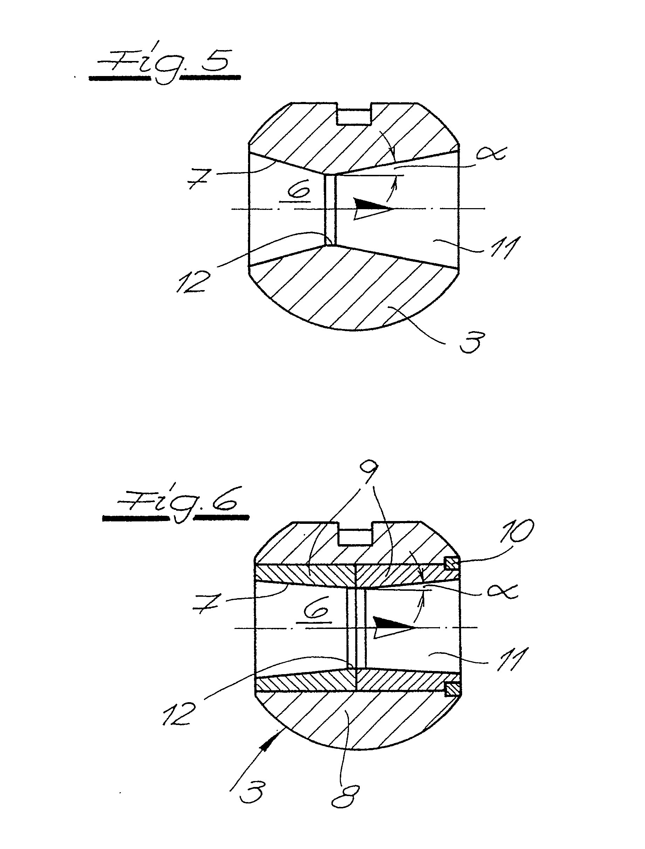

Gegenstand der Fig. 1 ist eine Regelarmatur in Form eines Kugelhahns für gasförmige und flüssige Stoffströme. Zum grundsätzlichen Aufbau der Regelarmatur gehören Gehäuse 1, Rohranschlußelemente 2, Stellelement 3 in Form einer Ventilkugel und Sitzelemente 4 in Form von Sitzringen. Die Ventilkugel 3 ist zwischen den Sitzringen 4 drehbeweglich gehalten und durch eine am Gehäuse 1 dichtend gehaltene Welle 5 betätigbar. Die Sitzringe 4 bestehen aus sinterkeramischem Werkstoff. Die Ventilkugel 3 weist einen Strömungskanal 6 mit einer Strömungskanalwand 7 auf, die ebenfalls aus einem verschleißfesten Werkstoff, vorzugsweise Sinterkeramik, besteht. Bei den Ausführungsformen gemäß den Fig. 2 bis 5 ist die Ventilkugel 3 als massives Sinterkeramikbauteil ausgebildet. Bei der Ausführungsform gemäß Fig. 6 weist die Ventilkugel 3 einen metallischen Stützkörper 8 mit einer Bohrung auf, in der eine sinterkeramische Hülse 9 eingesetzt ist. Die Hülse 9 ist lose in die Bohrung eingelegt und am Strömungskanalaustritt durch ein Formschlußelement 10 axial gehalten. Das Formschlußelement 10 ist als Metallring mit einer verschleißfesten Beschichtung ausgebildet. Der Strömungskanal 6 des Stellelementes weist in der durch einen Pfeil angedeuteten Strömungsrichtung eine Querschnittserweiterung 11 auf, die in dem fluiddurchströmten Strömungskanal eine Strahlablösung an der Strömungskanalwand 7 bewirkt. Die Ausgestaltung der Querschnittserweiterung 11 ist auf verschiedene Weise möglich. Bei der Ausführungsform gemäß Fig. 2 ändert sich die Querschnittserweiterung 11 unstetig von einem Strömungseintrittsquerschnitt a auf einen in Strömungsrichtung konstanten Strömungsaustrittsquerschnitt b. Bei der Ausführungsform gemäß Fig. 3 ist die Strömungskanalwand 7 im Bereich der Querschnittserweiterung 11 mit stetigem Profil, z. B. konisch, ausgebildet. Die Querschnittserweiterung 11 schließt sich dabei mit unstetigem Übergang an einen Strömungskanalabschnitt c an, der einen konstanten Strömungskanalquerschnitt aufweist.

Die in den Fig. 3 bis 6 dargestellten Ausführungsformen sind dadurch gekennzeichnet, daß der Strömungskanal 6 eine Einschnürung 12 aufweist, an die sich mit unstetigem Übergang die Querschnittserweiterung 11 anschließt. Durch die Einschnürung 12 erfolgt eine Bündelung des im Strömungskanal geführten Stoffstromes. Auch hier bestehen verschiedene Möglichkeiten der Ausgestaltung. Bei den Ausführungsbeispielen gemäß den Fig. 5 und 6 ist die Strömungskanalwand 7 im Bereich der Einschnürung 12 und der Querschnittserweiterung 11 jeweils mit stetigem Profil in Strömungsrichtung ausgebildet. Es versteht sich, daß der Öffnungswinkel α der Querschnittserweiterung 11 so groß gewählt ist, daß in ausreichendem Maße eine Strömungsablösung an der Strömungskanalwand 7 auftritt. Gemäß Fig. 4 kann die Einschnürung 12 sowie die Querschnittserweiterung 11 auch durch eine im Strömungskanal angeordnete Blende 13 verwirklicht werden. Die durch die Blendenöffnung definierte Einschnürung kann dabei auch asymmetrisch bezogen auf die Strömungskanalachse angeordnet sein.

**Patentansprüche**

1.  Regelarmatur für gasförmige und flüssige Stoffströme mit Gehäuse (1), Rohranschlußelementen (2) und einem zwischen Sitzelementen (4) gehaltenen Stellelement (3), das einen Strömungskanal (6) mit einer Strömungskanalwand (7) aus verschleißfestem Werkstoff aufweist, **dadurch gekennzeichnet**, daß der Strömungskanal (6) des Stellelementes (3) in Strömungsrichtung eine Querschnittserweiterung (11) aufweist, die in dem fluiddurchströmten Strömungskanal (6) eine Strahlablösung an der Strömungskanalwand (7) bewirkt.

2. Regelarmatur nach Anspruch 1, dadurch gekennzeichnet, daß sich die Querschnittserweiterung (11) unstetig von einem Strömungseintrittsquerschnitt (a) auf einen in Strömungsrichtung konstanten Strömungsaustrittsquerschnitt (b) ändert.

3. Regelarmatur nach Anspruch 1, dadurch gekennzeichnet, daß sich die Querschnittserweiterung (11) mit unstetigem Übergang an einen Strömungskanalabschnitt (c) mit konstantem Strömungsquerschnitt anschließt und daß die Strömungskanalwand (7) im Bereich der Querschnittserweiterung (11) mit stetigem Profil in Strömungsrichtung ausgebildet ist.

4. Regelarmatur nach Anspruch 1, dadurch gekennzeichnet, daß der Strömungskanal (6) des Stellelementes (3) eine Einschnürung (12) aufweist, an die sich mit unstetigem Übergang die Querschnittserweiterung (11) anschließt.

5. Regelarmatur nach Anspruch 4, dadurch gekennzeichnet, daß die Strömungskanalwand (7) im Bereich der Einschnürung (12) und der Querschnittserweiterung (11) jeweils mit stetigem Profil in Strömungsrichtung ausgebildet ist.

6. Regelarmatur nach Anspruch 4 oder 5, dadurch gekennzeichnet, daß die Einschnürung (12) bezogen auf die Strömungskanalachse asymmetrisch angeordnet ist.

7. Regelarmatur nach einem der Ansprüche 1 bis 6, dadurch gekennzeichnet, daß der Strömungskanal (6) in eine sinterkeramische Hülse (9) eingearbeitet ist, die druckentlastet in einer Bohrung des Stellelementes (3) angeordnet und am Strömungskanalaustritt durch ein Formschlußelement (10) axial gehalten ist.

Fig. 1

Fig.2

Fig.3

Fig.4

6

*Fig.5*

*Fig.6*

| EINSCHLÄGIGE DOKUMENTE | | EP 91107897.0 |
| --- | --- | --- |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| --- | --- | --- | --- |
| X | US - A - 4 304 261 (FORESTER) * Gesamt; insb. Fig. 8; Spalte 2, Zeile 1 * -- | 1,3,4, 5,7 | F 16 K 5/08 |
| X | DE - A1 - 3 627 328 (DAUME) * Gesamt; insb. Fig. 4,6 * | 1,2 | |
| A | -- | 3,4,7 | |
| X | DE - A1 - 3 902 185 (NGK SPARK PLING) * Gesamt; insb. Fig. 1,2 * | 1,3,4, 5 | |
| A | -- | 7 | |
| A | DE - B1 - 2 732 672 (HANNEMANN) * Gesamt * -- | 1,2,6 | |
| A | DD - A1 - 223 782 (VEB MAGDEBURGER) * Gesamt * -- | 1,5,6 | |

| | | | RECHERCHIERTE SACHGEBIETE (Int. Cl.⁵) |
| --- | --- | --- | --- |
| A | DE - B2 - 2 119 357 (WEINHEIMER GUMMIWERKE) * Gesamt * ---- | 1,4-6 | F 16 K 1/00 F 16 K 3/00 F 16 K 5/00 |

Der vorliegende Recherchenbericht wurde für alle Patentansprüche erstellt.

| Recherchenort WIEN | Abschlußdatum der Recherche 27-08-1991 | Prüfer BLASL |
| --- | --- | --- |